Europäisches Patentamt

European Patent Office

Office européen des brevets

(19)

(11) EP 0 917 394 A2

(12) # EUROPEAN PATENT APPLICATION

(43) Date of publication:
**19.05.1999 Bulletin 1999/20**

(51) Int Cl.$^6$: **H04Q 11/04**

(21) Application number: **98500247.6**

(22) Date of filing: **13.11.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.11.1997 ES 9702379**

(71) Applicant: **Telefonica, S.A.**
**28013 Madrid (ES)**

(72) Inventors:
 • **Solana de Quesada, Juan Ignacio**
   **28028 Madrid (ES)**
 • **Pallares Lopez, Miguel Angel**
   **28028 Madrid (ES)**
 • **Paz Salgado, Juan Antonio**
   **28028 Madrid (ES)**

(74) Representative: **Carpintero Lopez, Francisco**
   **HERRERO & ASOCIADOS, S.L.**
   **Alcalá, 21**
   **28014 Madrid (ES)**

(54) **ATM layer terminal adapter**

(57)    A terminal adapter which acts as an optical line terminator in broad band networks to optimise user or private user network access to a public ATM network. It allows the user to set up point-multipoint connections, to conform traffic for access to the public network and the measurement of transmission performance without interrupting the flow of information. This is achieved by connecting it to a PC to carry out local management of the device which is made up of a physical layer module for carrying out the conversion of optical signal to electric, an ATM layer module which is responsible for the functions of traffic conformity, operation and maintenance and multiplexing, as well as the synchronism module which selects the transmission speed and sends the appropriate synchronism signal to the rest of the device's components.

FIG.1

EP 0 917 394 A2

## Description

## OBJECT OF THE INVENTION

This invention refers to an electronic device which acts as an optical line terminator in broad band networks and which adapts and optimises user access to the ATM network (Asynchronous Transfer Mode) carrying out the functions of electro-optical conversion in both monomode and multimode in line with ITU (International Telecommunication Union) recommendation G.957, termination of regenerator and SDH multiplex sections, in line with ITU recommendations G.707, G. 708, G.709 and G.783, and physical and ATM layer operation and maintenance in accordance with ITU recommendation I610 and traffic conformity and cell replication.

This invention provides the possibility of connecting a personal computer (PC) to carry out the local management of the device, using an application that runs in the Windows environment and which consists of alarm monitoring and control, monitoring of both physical and ATM layer transmission performance statistics, the realisation of loops, establishing connections both on a virtual path as well as a virtual circuit and point-multipoint type connections, the handling of error management functions, the handling of performance management functions, the gathering and monitoring of traffic conformity session statistics and uploading of new versions.

## FIELD OF THE INVENTION

This invention's field of application is the industry devoted to the development of telecommunications technology and, more specifically, the equipping of frontier points on broad band optical access networks based on SDH (Synchronous Digital Hierarchy) with STM-1 (Synchronous Transmission Module level 1) frame structure.

## BACKGROUND OF THE INVENTION

There is a need for a series of functions aimed at improving the quality of user services in the user access interfaces to ATM-based Broad Band Integrated Digital Network Services (B-ISDN).

Commercial ATM equipment which carries out certain functions in this respect is known to exist in the market, but nothing is known of any equipment that can support the establishing of point-multipoint connections, traffic conformity - so that this successfully crosses the policing function which is found at the entry to the public network and which ensures compliance with the traffic contract between the user and the network in establishing communication -, nor facilitates a whole series of enormous possibilities for measuring performance without the need to interrupt the flow of user information and report on the existence and location of errors that come about in the ATM network equipment.

The device that is the object of this invention resolves this type of deficiency found in user equipment.

## DESCRIPTION OF THE INVENTION

The **ATM Layer Terminal Adapter** which is the object of this invention is basically made up of the following modules:

1).- Physical layer module interface with the operator.

2).- Physical layer module interface with the user.

3).- Synchronism module.

4).- ATM layer module.

The physical layer module interface with the operator is made up of the following blocks:

1).- Monomode electro-optical access converter.

2).- SDH access terminator

The Monomode electro-optical access converter houses the B-ISDN connection interface.

During transmission it is responsible for transforming the electrical signal received from the SDH access terminator into an optical signal for transmission along a fibre optic cable which is connected to it.

During reception, it converts the incoming optical signal from the fibre connected to it into an electrical signal that is appropriate for the SDH access terminator.

The SDH access terminator block carries out the specific functions of the transmission convergence sub-layer within the physical layer of the B-ISDN reference model. During transmission it assembles the virtual container VC-4 that comes from the ATM layer, within the SDH's STM frame structure. In reception it extracts the VC-4 virtual container from the frame structure for delivery to the ATM layer module.

The physical layer module interface with the user is made up of the following blocks:

1).- Monomode or multimode electro-optical user converter.

2).- SDH user terminator.

The monomode or multimode electro-optical user converter houses the interface that is connected to an B-ISDN user's private network.

During transmission it is responsible for transforming the electrical signal received from the user's SDH terminator block into an optical signal for transmission via a monomode or multimode fibre optic cable connected to it.

On reception it converts the incoming optical signal from the fibre optic cable into an electrical signal that is appropriate for the user's SDH terminator.

The option of installing a monomode or multi-mode electro-optical converter enables the equipment to establish the connection between two networks that use different optical transport supports. In this way it is possible to adapt to differing private user network configurations.

The user SDH terminator block carries out the specific functions or the transmission convergence sub-layer within the physical layer of the B-ISDN reference model. During transmission it assembles the VC-4 virtual container coming from the ATM layer module within the STM-1 frame structure of the SDH. On reception it extracts the VC-4 virtual container from the frame structure for delivery to the ATM layer module.

The Synchronism module carries out synchronisation of the private user network with the operator's access network. Synchronisation is achieved through a PLL (phase locked loop) which generates the binary transmission speed for the user-operator interfaces. this binary speed is automatically selected from two possible sources:

1).- The binary information signal extracted from the operator's access interface.
2).- A signal received from a local oscillators situated in the synchronisation module itself.

The automatic selection is carried out by interpreting synchronism information that the operator sends through the access network in the Z1 heading octet of the regenerating section in the SDH frame with STM-1 structure.

The ATM layer module is made up of the following blocks:

1).- Selector/discriminator.

2).- Cell replicator.

3).- Access multiplex.

4).- User multiplex.

5).- Operation and maintenance.

6).- Traffic conformer.

7).- Processing block

The selector/discriminator block carries out:

a).- Translation of ATM cell heading labels.

b).- The identification and marking of the groups of cells that should process the operation and maintenance blocks and traffic conformer.

c).- Multiplexing of cells coming from the user and operator interfaces as well as those coming from the cell replicator block.

Other components of the equipment that is the object of this invention are connected to carry out these functions via the following information flows:

-. It receives the flow of ATM cells coming from the user interface from the user's SDH terminator block in the appropriate format along with a series of associated synchronism signals.

-. It receives the flow of ATM cells coming from the operator interface from the SDH access terminator block in the appropriate format along with a series of associated synchronism signals.

-. It receives the flow of replicated cells from the cell replicator block along with the synchronism signals and associated destination interface identification.

-. It exchanges data with the processing block for the configuration of heading translation functions, establishing connections, of operation and maintenance sessions and of traffic conformity sessions.

-. It sends the flow of ATM cells along with the associated synchronism information to the cell replicator block along with indication of the destination interface towards which the replicated cells should be sent.

-. It sends the flow of ATM cells to the operation and maintenance blocks, access multiplex, user multiplex along with a series of signals to indicate to each of them the ATM cells that they should process.

The cell replicator block is responsible for replicating the cells of those connections which have been defined as point-multipoint type and for this reason it receives the flow of original ATM cells to be replicated from the selector/discrimator block along with the synchronism information and the indication of the destination interface towards which the replicated cells should be sent. It also sends the replicated ATM cells to the selector/discriminator block along with associated synchronism signals and destination interface identification.

The access multiplex block is responsible for inserting -at exactly the right moment - the operations and maintenance (OAM) cells into the flow of cells coming from the user interface that are directed towards the operator interface.

The access multiplex block is connected to the rest of the equipment's components via the following information flows:

-. It receives the flow of ATM cells from the selector/ discriminator block that should be sent towards the operator interface along with the associated synchronism signals.

-. It receives the operation and maintenance cells that should be inserted into the flow of cells that are directed towards the operator interface from the operation and maintenance module along with the associated synchronism signals.

-. It delivers the ATM cells resulting from the multiplexing of the two previous groups of cells to the traffic conformer block along with a series of signals that indicate that the cells should be dealt with and which should follow their route towards the operator interface without being affected.

The user multiplex block is responsible for inserting - at exactly the right moment - the operation and maintenance cells into the flow of cells coming from the operator interface that are directed towards the user interface.

The user multiplex is connected to the rest of the components in the equipment that is the object of this invention via the following information flows:

-. It receives the ATM cells that should be sent towards the user interface from the selector/discriminator block along with the associated synchronism signals.

-. It receives the operation and maintenance cells from the operation and maintenance block. These should be inserted into the flow of cells that are directed towards the user interface along with the associated synchronism signals.

-. It delivers the flow of cells that should be directed towards the user interface to the physical layer interface with user module.

The operation and maintenance block has as its mission the generation and analysis of operation and maintenance flows for both F4 flows (virtual path level) and F5 (virtual channel level) regardless of whether the direction is operator-user or user-operator.

From the point of view of the operation and maintenance flows in the ATM layer, and depending on the availability of operation and maintenance functions in the equipment of the user being connected to, the equipment that is the object of this invention is able to be configured in order to behave as:

a).- End-point (EP) connection, definable as a virtual path (VP) or virtual channel (VC). The end point is situated on the limit to the level being dealt with, where service is provided to the customer.

b).- Connecting-point (CP), definable on both a VP and a VC level. The connecting point is situated at the point of connection where information is transparently routed, providing the connection function.

c).- Segment end-point (SEP), definable on both VP and VC levels.

The segment end-points' mission is to terminate the OAM segment flows which enable demarcation of portions of the connections and the operation and maintenance responsibilities between operators. The configuration of the segments is dynamic throughout the period of connection and can be suitably modified for a more advantageous use of defect detection functions (loops and continuity checks) and performance monitoring.

The operation and maintenance block is made up of three blocks:

1).- Programmable logic block.

2).- Twin port memory block.

3).- Microcontroller block.

The programmable logic block carries out the high speed functions in cell generation and detection over the flow of data cells coming from the selector/discriminator block. The information and the partial results extracted from the data cells are stored in the twin port memory block. For its transfer to the Microcontroller block, the programmable logic block sends the appropriate signal to indicate to the former the start of a DMA (direct memory access) process for extracting the information from the twin port memory block.

The twin port memory block is a twin port memory which is organised in memory segments whose size depends on the functions for which it is used.

The different segments are used for the exchange of information associated with the generation and detection of each type of operation and maintenance cell (flows F4 and F5).

The Microcontroller block accesses the information stored in the twin port memory block to collate statistics, update alarm states, etc. At the same time, it stores the information required by the programmable logic block in the appropriate segment of the twin memory block, for forming the cells that it should generate and mix with the flow of cells coming from the selector/discriminator block. Similarly, it has a communications channel with the processing block.

The operation and maintenance block is connected to the rest of this invention's equipment components via the following information flows:

-. It receives those operation and maintenance cells that are relevant to its functioning from the selector/ discriminator block along with the associated synchronism signals.

-. It sends the cells it generates at the appropriate moment to the access multiplex block and which should be directed towards the operator interface along with the associated synchronism signals.

-. It sends the cells it generates at the appropriate moment to the access multiplex block and which should be directed towards the user interface along with the associated synchronism signals.

The traffic conformer block carries out traffic conformity, i.e. it changes the traffic characteristics of a train of ATM cells in a virtual channel connection (VCC) or in a virtual path connection (VPC) so that they are modified in a controlled manner and maintain the integrity of the cell sequence in the ATM connection.

The fundamental objective of traffic conformity when it is used in user equipment is to guarantee that the traffic generated in the user-network interface conforms to the traffic contract.

Two types of traffic conformity are contemplated: one is of the Deterministic Bit Rate type (DBR) using an appropriate cell time spacing, and the other is Statistical Bit Rate which limits the length of the generated cell burst. The type used will be selected for each connection.

The traffic conformer is made up of the following blocks:

    1).- Twin port memory.

    2).- Memory.

    3).- Memory management.

    4).- Algorithmic spacer.

The twin port memory is a memory with twin port where the relevant parameters are kept for the different conformity sessions and which will determine their behaviour. The values of these parameters will be supplied by the processing block.

The memory block is essentially a Random Access Memory (RAM) which stores those ATM cells that belong to connections that lie within any traffic conformity session and which are marked by the user multiplex block using a series of associated signals.

The memory management block handles the share-out of the memory block cell storage RAM which is needed to carry out the traffic conformity function between the virtual connections that use the said function. To do this, the memory is divided into fixed size and position blocks. The memory management ensures that the memory behaves logically as a dynamically sized FIFO (First In First Out) memory set with each element corresponding to a conformity session and represent the blocks into which the memory is divided.

The management of the FIFO memories is carried out via some parameters which are maintained by the memory management block.

Requests or freeing of memory blocks are produced in accordance with the length of the queue associated with the increase or decrease in each traffic conformity session.

The establishment of conformity sessions is indicated to the memory management block by the processing block once the latter has programmed the necessary parameters.

The algorithmic spacer block determines the moments at which the conformity session ATM cells should leave the RAM memory of the memory block. The rate at which cell extraction requests that are generated by the algorithmic spacer block depends on the traffic conformity session that has been configured.

The traffic conformity sessions are configured taking account of the following parameters:

    a).- PCR (Peak Cell Rate) which is expressed in cells per second.

    b).- SCR (Sustainable Cell Rate) which is expressed in cells per second.

    c).- MBS (Maximum Burst Size) which is expressed in cells or its equivalent IBT (Intrinsic Burst Tolerance) which is expressed in seconds.

When a traffic conformity session is configured as type DBR, the traffic conformity block delivers a train of equally-spaced cells to its exit at the rate of PCR cells per second. Sessions configured as SBR use all of the aforementioned parameters and achieves a train of burst-distributed cells at the traffic conformity exit so that the peak traffic within each burst is limited to PCR cells per second and its duration to IBT seconds. The peak traffic is limited to SCR cells per second between bursts.

The algorithmic spacer block is made up of the following blocks:

    1).- DDS_PCR

    2).- DDS_SCR

    3).- Meter

The DDS_PCR and DDS_SCR both have exactly the same internal structure with an internal associated logic for handling the floating point notation so that at its exit a series of pulses is achieved whose frequency is the number of cells per second that indicate PCR or SCR.

If the traffic conformity session is of the SBR type, and assuming that there are cells in the queue associated with the session, then the DDS_SCR generates exit pulses -these are emission requests- at the PCR rate and these cause increases in the value of the meter block. At the same time, the DDS_SCR block generates pulses at the SCR rate and these cause decreases in the value held in the meter block. When this reaches a certain CM value (representing burst length), the pulses that the DDS_SCR block generate stop being converted into cell emission requests hence causing a cell emission burst.

If the traffic conformity session is of the DBR type, the meter block value is programmed to that it never reaches the CM value so that, assuming there are cells in the queue associated with the session, the DDS_PCR block generates exit pulses -which are emission requests- at the PCR rate until the associated queue is emptied.

Regardless of the type of conformity session chosen, the requests for cell emission are stored in a pending request queue from where they are extracted in line with memory management block reports to the algorithmic spacer about the existence of an interval of free cell that is going to be devoted to carrying out the reading of queue memory.

The processing block carries out control of this invention's equipment functions. It will be fitted with an RS-232 line interface with the PC which houses the equipment's Local Management System that is made up of a management software application which runs under Windows 3.1. or later version.

The processing block controls the initial start-up of the equipment that is the object of this invention via activation and initialisation of its components, including its configuration so that, from the point of view operation and maintenance flows, it behaves as an EP (End Point), CP (Connecting Point) or SEP (Segment End Point).

It will control the following functions:

a).- Management of the physical layer.

b).- Management of the ATM layer.

c).- Management of the VPC connections.

d).- Management of the VCC connections.

e).- Management of the serial line interface.

In managing the physical layer the processing block will control:

-. Switching on and off of the electro-optical conversion lasers.

-. Establishing and consultation of the state of local and remote loops for the user and operator interfaces.

-. The detection and provision of information to the local management system of the alarms corresponding to the F1 flows from the regenerator section level, F2 from the digital section level and F3 from the transmission path level.

-. Collation of performance statistics from operation and maintenance flows F2 and F3.

In managing the ATM layer the processing block will carry out:

-. Connection management, be they VPC type (both bidirectional and point-multipoint) or VCC (both bidirectional and point-multipoint).

-. The management of traffic conformity session, programming the values of the necessary parameters for the functioning of the spacer algorithms and memory management as well as the collection of traffic conformity statistics from different sessions.

-. The management of operation and maintenance functions, be they the establishing of loops, the realisation of continuity tests, the management of performance monitoring sessions, the collation of statistics on the ATM layer performance from the F4 and F5 flows, and the detection and provision of information to the local management system regarding the alarms on the ATM layer level.

VPC connection management defines the connections at intermediate points in a VPC connection and is able to carry out the declaration of a bi-directional VPC connection so that the equipment will need to be provided with VPI (Virtual Path Identifier) entry and exit labels for each interface, or a VPC point-multipoint connection branch declaration so that the equipment will need to be provided with entry and exit interface labels.

VCC connection management allows the VCC declaration to be bi-directional so that the equipment that is the object of this invention will need to work as a VP-EP (Virtual Path-End Point) or a VP-EP/VP-SEP (Virtual Path-Segment End Point) for VPC connections that contain VCC. As well as these VPC having a bi-directional nature or a branch declaration of a VCC point-multipoint connection, it is necessary that the equipment works as VP-EP or VP-EP/VP-SEP for VPC connections that contain the VCC connection, in addition to the VPC connections having a bi-directional or unidirectional nature in the sense of the point-multipoint VCC connection.

Serial line interface management allows the user's commands to be transmitted to the equipment that is the object of this invention via the local management system and interpreted by the processing block. This is responsible for programming the hardware and for invoking drivers and controllers for carrying out the necessary actions. At the same time the processing block carries out collection from internal registers of those parameters that are necessary for collating statistics associated with operation and maintenance and traffic conformity sessions, processing them and sending the results by serial line to the local management system for presentation. It will also send messages to the latter which do not require any a priori commands from the user like those that refer to the alarm conditions.

## BRIEF DESCRIPTION OF THE DRAWINGS

To complete the description being made, and with the aim of helping to improve understanding of the characteristics of the invention, this descriptive memorandum is accompanied with six sheets of plans which are an integral part of this document. These give a clear illustration of the following:

Figure 1).- Shows a block diagram of the ATM Layer Terminal Adapter blocks along with its main internal connections.

Figure 2).- Shows a block diagram of the ATM layer module blocks along with its main connections.

Figure 3).- Is a block diagram showing the operation and maintenance block along with its main connections.

Figure 4).- Shows a block diagram of the traffic conformity block along with its main connections.

Figure 5).- Shows a diagram of the working of the memory management algorithm.

Figure 6).- Shows a block diagram of the algorithm spacer along with its main connections.

Figure 7).- Shows a block diagram of the DDS_PCR block along with its main connections.

## DESCRIPTION OF ONE OF THE INVENTION'S PREFERRED ACTIONS

The ATM Layer Adapter, the equipment that is the object of this invention, optimises user access to the public ATM network supported by B-ISDN.

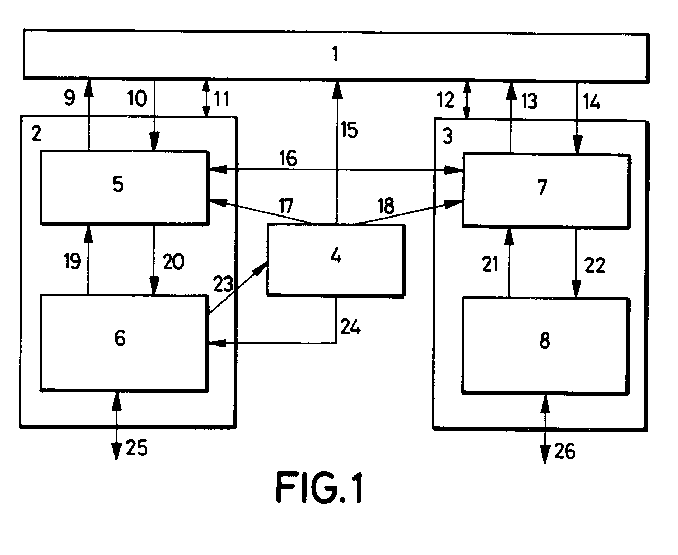

Figure 1 shows that the ATM Layer Adapter is basically made up of the following modules:

1).- Physical layer module (2) interface with the operator.

2).- Physical layer module (3) interface with the user.

3).- Synchronism module (4).

4).- ATM Layer module (1).

The physical layer module interface with the operator is made up of the following blocks:

1).- Electro-optical monomode access converter (6).

2).- SDH access terminator (5).

The B-ISDN connection interface is situated in the electro-optical monomode access converter (6).

During transmission the electrical signal (20) delivered by the SDH access terminator is converted into an optical signal for transmission via a monomode fibre optic cable connected to it within a second window (wavelength 1,330 nm).

On reception, it converts the optical signal coming from the fibre (25) connected to it into an electrical signal (19) appropriate for the SDH access terminator block.

The SDH access terminator block (5) carries out specific sub-layer transmission convergence functions within the physical layer of the B-ISDN reference model, as specified in ITU recommendation I.321. During transmission it assembles the type 4 virtual container VC-4 coming from the ATM layer module (1) due to the connection (10) within the SDH's STM-1 frame structure. On reception it extracts the VC-4 virtual container from the frame structure to be delivered by the connection (9) to the ATM Layer Module (1).

Information is exchanged via the connection (16) with the user's SDH terminator block with respect to the type 4 container (VC-4), extracted from the SDH frame with STM-1 structure received in an interface and which will be transmitted in the other and vice-versa.

The physical layer module (3) interface with the user is made up of the following blocks:

1).- User mono-mode or multi-mode electro-optical converter (8).

2).- User SDH terminator (7).

The private user network B-ISDN connection interface (26) is situated in the user mono-mode or multi-mode electro-optical converter (8).

During transmission the electrical signal (22) delivered from the user SDH terminator block (7) is converted into an optical signal for transmission via a mono or multi-mode optical fibre (26) within the second window (wavelength 1,330 nm) to which it is connected.

On reception it converts the optical signal coming from the fibre optic cable connected to it (26) into an electrical signal (21) appropriate for the user SDH terminator (7).

The option of installing a mono or multi-mode electro-optical converter allows the equipment to effect connection between two networks that use different optical transport supports. In this manner this is how the two possible private user network configurations are adapted to.

The user SDH terminator block carries out the specific functions of the transmission convergence sub-layer of the physical layer of the B-ISDN reference model as specified in ITU recommendation I.321. During transmission it assembles the type 4 virtual container VC-4 coming from the ATM layer module (1) due to the connection (14) within the SDH's STM-1 frame structure. On reception it extracts the VC-4 virtual container from the frame structure to be delivered to the ATM Layer Module (1) by the connection (13) .

The synchronism module (4) is responsible for synchronising the private user network with the operator. Synchronisation is achieved using a PLL (Phase Lock Loop) circuit which generates the binary transmission speed for the user and operator interfaces. This binary speed is selected automatically from tow possible sources:

1).- The binary information signal extracted form the operator access interface.

2).- A signal coming from the local oscillator situated in the synchronism module itself.

The automatic selection is carried out by interpreting synchronism information that the operator sends across the access network in the Z1 heading octet of the regenerating section in the SDH frame with STM-1 structure. This information is recovered by the access electro-optical converter (6) and is sent to the synchronism module across the connection (23).

The connections (17) with the SDH access (18) terminator (5) with the user's SDH (24) terminator (7), with the electro-optical converter (6) and (15) with the ATM layer module (1) are used by the synchronism module (4) to send them information with respect to the binary speed that is used to transmit and receive as well as the internal processing frequency.

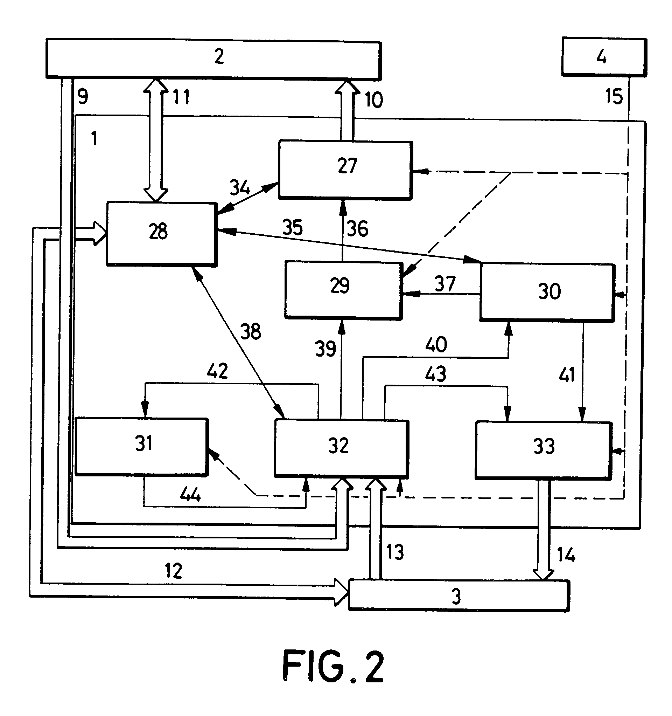

Figure 2 illustrates that the ATM layer module is made up of the following blocks:

1).- Selector/discriminator (32).

2).- Cell replicator (31).

3).- Access multiplex (29).

4).- User multiplex (33).

5).- Operation and maintenance (30).

6).- Traffic conformer (27).

7).- Processing block (28).

The selector/discriminator block (32) carries out:

a).- Translation of ATM cell heading labels.

b).- The identification and marking of the groups of cells that should process the operation and maintenance (30) blocks and traffic conformer (27).

c).- Multiplexing of cells coming from the user and operator interfaces ass well as those coming from the cell replicator block (31).

Other components of the equipment that is the object of this invention are connected to carry out these functions via the following information flows:

-.    It receives the flow of ATM cells coming from the user interface from the user's SDH terminator block (7) and the connection (13) in a format of 53 octets along with a series of associated synchronism signals.

-.    It receives the flow of ATM cells coming from the operator interface from the SDH access terminator block (5) and the connection (9) in the a format of 53 octets along with a series of associated synchronism signals.

-.    It receives the flow of replicated cells from the cell replicator block (44) and the connection (44) along with the synchronism and associated destination interface identification signals.

-.    It exchanges data with the processing block (28) via the connection (38) for the configuration of heading translation functions, establishing connections, of operation and maintenance sessions and of traffic conformity sessions.

-.    It sends the flow of ATM cells along with the associated synchronism information via the connection (42) to the cell replicator block (31) along with indication of the destination interface towards which the replicated cells should be sent.

-.    It sends the flow of ATM cells to the operation and maintenance blocks (30), access multiplex (29) and user multiplex (33) via connections (40), (39) and (43). The cell replicator block (31) is responsible for replicating the cells of those connections which have been defined as point-multipoint type and for this reason it receives the flow of original ATM cells to be replicated from the selector/discrimator block (32) through connection (42) along with the synchronism information and the indication of the destination interface towards which the replicated cells should be sent. It also sends the replicated ATM cells to the selector/discriminator block (32) through connection (44) along with associated synchronism signals and destination interface identification.

The access multiplex block (29) is responsible for inserting -at exactly the right moment - the operations and maintenance (OAM) cells into the flow of cells coming from the user interface that are directed towards the operator interface.

The access multiplex (29) is connected to the rest of the components of the equipment that is the object of this invention via the following information flows:

-. It receives the flow of ATM cells from the selector/ discriminator block (32) via connection (37) that should be sent towards the operator interface along with the associated synchronism signals.

-. It receives the operation and maintenance cells that should be inserted into the flow of cells that are directed towards the operator interface from the operation and maintenance module (30) via connection (37) along with the associated synchronism signals.

-. It delivers the ATM cells resulting from the multiplexing of the two previous groups of cells to the traffic conformer block (27) via connection (36) along with a series of signals that indicate that the cells should be dealt with and which should follow their route towards the operator interface without being affected.

The user multiplex block (33) is responsible for inserting - at exactly the right moment - the operation and maintenance cells into the flow of cells coming from the operator interface that are directed towards the user interface.

The user multiplex (33) is connected to the rest of the components in the equipment that is the object of this invention via the following information flows:

-. It receives the ATM cells that should be sent towards the user interface from the selector/discriminator block (32) via connection (43) along with the associated synchronism signals.

-. It receives the operation and maintenance cells from the operation and maintenance block (30) via connection (41). These should be inserted into the flow of cells that are directed towards the user interface along with the associated synchronism signals.

-. It delivers via connection (14) the flow of cells that should be directed towards the user interface to the physical layer interface user module (3).

The operation and maintenance block (30) has as its mission the generation and analysis of operation and maintenance flows for both F4 flows (virtual path level) and F5 (virtual channel level) regardless of whether the direction is operator-user or user-operator.

From the point of view of the operation and maintenance flows in the ATM layer, and depending on the availability of operation and maintenance functions in the equipment of the user being connected to, the equipment that is the object of this invention is able to be configured in order to behave as:

a) .- End-point (EP) connection, definable as a virtual path (VP) or virtual channel (VC). The end point is situated on the limit to the level being dealt with, where service is provided to the customer.

b).- Connecting-point (CP), definable on both a VP and a VC level. The connecting point is situated at the point of connection where information is transparently routed, providing the connectivity function.

c).- Segment end-point (SEP), definable on both VP and VC levels.

The segment end-points' mission is to terminate the OAM segment flows which enable demarcation of portions of the connections and the operation and maintenance responsibilities between operators. The configuration of the segments is dynamic throughout the period of connection and can be suitably modified for a more advantageous use of defect detection functions (loops and continuity checks) and performance monitoring.

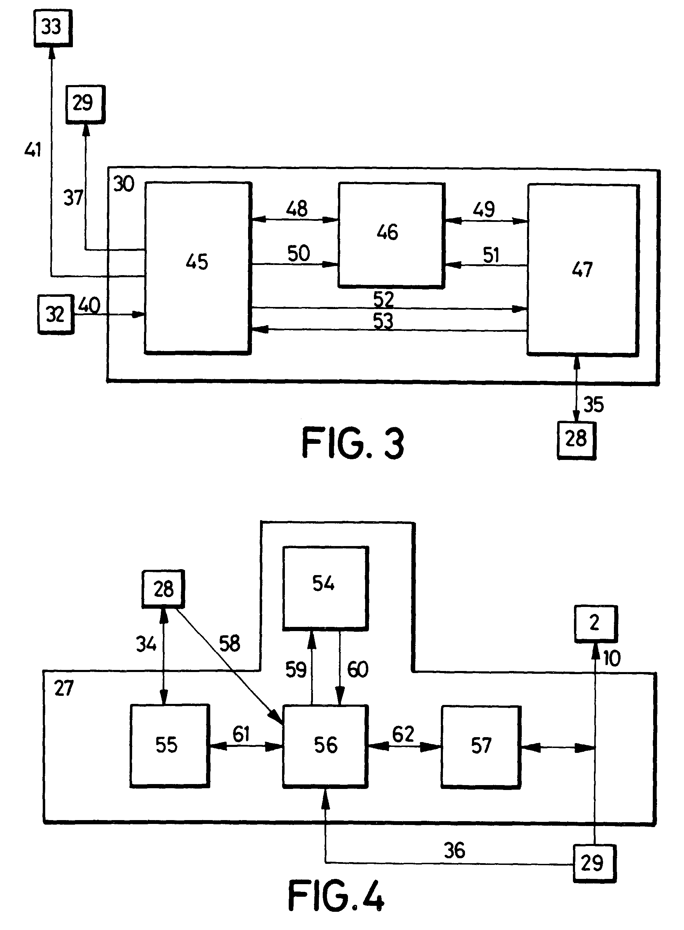

Figure 3 shows that the operation and maintenance block (30) is made up of three blocks:

1).- Programmable logic block (45).

2).- Twin port memory block (46).

3).- Microcontroller block (47).

The programmable logic block (45) carries out the high speed functions in cell generation and detection over the flow of data cells coming from the selector/discriminator block (32). The information and the partial results extracted from the data cells are stored in the twin port memory block (46) to be used by the address (46) and data (48) strands. For its transfer to the programmable logic Microcontroller block (45) sends the appropriate signal via connections (52) and (53) to indicate to the former to start a DMA (direct memory access) process for extracting the information using the address (51) and data (49) strands from the twin port memory block (46).

The twin port memory block (46) is a twin port memory which is organised in memory segments whose size depends on the functions for which it is used. The different segments are used for the exchange of information associated with the generation and detection of each type of operation and maintenance cell (flows F4 and F5).

The segments devoted to the generation of operation and maintenance flows are:

-. AGS (Alarm Cell Generation Segment).

-. CCGS (Checking and Continuity Cell Generation Segment).

-. LGS (Loop Cell Generation Segment).

-. ADGS (Activation/disabling Cell Generation Segment).

-. FPMGS (Forward Performance Management Cell Generation Segment).

-. BRGS (Backward Reporting Generation Segment).

The Microcontroller block (47) should load only the significant generated cell values in the corresponding segment of the twin port memory block (46) with there being no need to write the fields that by defect have no values.

The segments devoted to the detection of cells are:

-. FMDS (Fault Management Cell Detection Segment) which includes AIS (Alarm Indication System), RDI (Remote Defect Indication) of loops, activation/disabling and BR (Backward Reporting).

-. FPMDS (FPM Cell Detection Segment), one per connection.

The Microcontroller block (47) accesses the information stored in the twin port memory block (46) to collate statistics, update alarm states, etc. At the same time, it stores the information required by the programmable logic block (45) in the appropriate segment of the twin memory block (46), for forming the cells that it should generate and mix with the flow of cells coming from the selector/discriminator block (32). Similarly, it has a communications channel (35) with the processing block (28).

The operation and maintenance block (30) is connected to the rest of this invention's equipment components via the following information flows:

-. It receives those operation and maintenance cells that are relevant to its functioning from the selector/discriminator block (32) via the connection (40) along with the associated synchronism signals.

-. It sends the cells it generates at the appropriate moment to the access multiplex block (29) via connection (37) and which should be directed towards the operator interface along with the associated synchronism signals.

-. It sends the cells it generates at the appropriate moment to the access multiplex block (33) via connection (41) and which should be directed towards the user interface along with the associated synchronism signals.

Continuing with Figure 2 we see that the traffic conformer block carries out traffic conformity, i.e. it changes the traffic characteristics of a train of ATM cells in a virtual channel connection (VCC) or in a virtual path connection (VPC) so that they are modified in a controlled manner and maintain the integrity of the cell sequence in the ATM connection.

The fundamental objective of traffic conformity when it is used in user equipment is to guarantee that the traffic generated in the user-network interface conforms to the traffic contract.

Two types of traffic conformity are contemplated: one is of the Deterministic Bit Rate type (DBR) using an appropriate cell time spacing, and the other is Statistical Bit Rate which limits the length of the generated cell burst. The type used will be selected for each connection.

The equipment that is the object of this invention allows a maximum of 32 traffic conformity sessions to be established with a maximum of 16 being SBR type.

Figure 4 shows that the traffic conformer (27) is connected to the rest of the components of the equipment that is the object of this invention via the following information flows:

-. It receives a set of signals from the User Multiplex (29) via connection (36) which indicate whether a cell makes up part of a traffic conformity session or not, along with the index of the session being dealt with.

-. It receives the information with reference to the traffic conformity session from the processing block (28) be they new session configuration parameters via connection (34) or signals to establish or end said sessions via connection (58).

-. It sends a flow of ATM cells via connection (10) to the Physical Layer Module (2) interface with the operator once subjected to traffic conformity. In those cases in which the cells need not be subjected to traffic conformity, they are stored in the memory block's (57) memory queue. This is why the connection (10) directly connects the access multiplex (29) with the Physical Layer Module (2) interface with the operator. When a cell should be stored in the queue memory to be subjected to traffic conformity, the memory management block (56) will give the appropriate command to the memory block (57) via connection (62).

Figure 4 shows that the traffic conformer (27) is made up of the following blocks:

  1).- Twin port memory (55).

  2).- Memory (57).

  3).- Memory management (56).

  4).- Algorithmic spacer (54).

The twin port memory block (55) is a memory with twin port where the relevant parameters are kept for the different conformity sessions and which communicates between the traffic conformer block (27) and the processing block (28) via connection (34) allowing the latter to:

- **-.** Programme the traffic parameters which configure the traffic conformity session behaviour, providing the memory management block (56) with the necessary signals via connection (58) to establish or free the connection.

- **-.** Modify the established session parameter values in order to modify their behaviour.

The memory block (57) is essentially a Random Access Memory (RAM) which stores those ATM cells that belong to connections that lie within any traffic conformity session and which are marked by the user multiplex block (29) using a series of associated signals.
The memory management block (56) handles the share-out of the memory block (57) cell storage RAM which is needed to carry out the traffic conformity function between the virtual connections that use the said function. To do this, the memory is divided into fixed size and position blocks where the cells belonging to virtual circuits are to be stored before being subjected to traffic conformity. The memory management (56) ensures that the memory behaves logically as a dynamically sized FIFO (First In First Out) memory set with each element corresponding to a conformity session and represent the blocks into which the memory is divided.
The management of the FIFO memories is carried out via some parameters which are maintained by the memory management block (56).
Requests or freeing of memory blocks are produced in accordance with the length of the queue associated with the increase or decrease in each traffic conformity session.
The memory management block (56) will access the twin-port memory (55) resident traffic conformity session configuration parameters via connection (61).

The management of cell reading and writing is carried out as follows:
Firstly the processing block (28) programmes various parameters in the twin-port memory block (55) via connection (34) that are needed for the traffic conformity session. These are:

- **-.** NB (i), instantaneous number of blocks that are being used by the i-th session at 0 value.

- **-.** NBR (i), number of blocks reserved for the i-th connection at a value of less than 4.

- **-.** NBN (i), number of blocks necessary.

- **-.** NC (i), NCP (i), number of cells processed and number of cells lost through overflow for the i-th session. These values are used for traffic conformity session statistical maintenance.

- **-.** PBPE (i), PBPL (i), i-th session block chain table pointers associated with cell reading and writing in the session at 0 value.

Once the previous values have been programmed the processing block (28) communicates the session index and orders the establishing of the session to the memory management block (56).

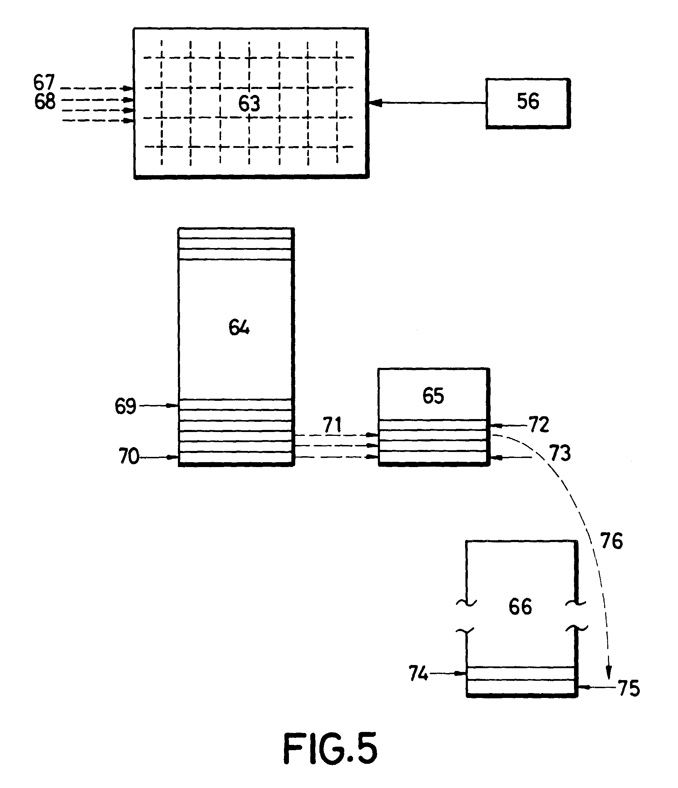

In Figure 5 we can see graphically how said memory is managed.
In order to carry out said management, the following instruments are available:

- **-.** TBA (64), table of assignable blocks. This table contains the set of non-reservable and non-usable blocks for the session underway. Two pointers (69) PL_TBA (TBA table read pointer) and (70) PE_TBA (TBA table write pointer) facilitate handling of the same.

- **-.** TBR (65), table of reserved blocks. This table contains the set of reserved blocks for active traffic conformity sessions. Two pointers (72) PL_TBR (TBR table read pointer) and (73) PE_TBR (TBR table write pointer) facilitate handling of the same.

- **-.** TBE (i) (66), i-th session block chain table. This represents the set of blocks that use a traffic conformity session at a given moment. The order in which these are linked is called the session tree. Two pointers (75) PBPL (i) (table string read pointer) and (74) PBPE (i) (table string write pointer) for the i-th session facilitate handling of the same.

When a traffic conformity session is activated, a process of reserving blocks for the session is carried out. This process consists of the extraction of as many blocks as indicated by the NBR parameter for the session from TBA table (64) (Table of assignable Blocks) to the TBR table (65) (Table of reserved Blocks) as indicated in the arrow line (71), starting up the pointers PE (67) (read pointer) and PL (68) (write pointer) for the session. At the same time, the pointers PL_TBA (69) (TBA table read pointer) and PE_TBR (73) (TBA table write pointer) are updated.

The process of cell writing is responsible for storing, if there is enough space in the cell storage memory (63), the cells belonging to each of the traffic conformity sessions underway. After storing each cell the PE pointer (67) of each session is increased. When there is overflow in the aforementioned pointer, the cell write process generates a request for an additional block and this is attended to in line with the following conditions:

-.   If the NBR for said session is greater than the NB for the same one then the request for memory block is granted and is extracted from the TBR table (65). The extracted block number is stored as indicated with arrow line (76) in the TEB table address (66) for the session which indicates the corresponding PBPE pointer (74) and this is increased.

-.   If in the session the NBR is less than or equal to the NB, which in turn is less than the NBN, then the request is granted by extracting from the TBA table (64) if there are available blocks (NBA parameter (number of assignable blocks) greater than 0). In this case NBA decreases by 1 and the number of the extracted block is stored directly in the TEB table (66) address for the session which indicates the corresponding PBPE pointer (74) and this increases. If the reverse is true then the block being used would be stored for cell reading. If the PE (67) reaches the PL (68) for the session then there would be a queue overflow associated with the session and a subsequent loss of cells. If this happens then the corresponding NCP parameter is increased.

-.   If in the session the NB is greater than or equal to the necessary number of blocks NBN, then the request is not granted even though there are available blocks in the TBA table (64). The block number being used is therefore stored for cell reading at the address indicated by the PBPE write pointer (74) and this increases. In this way the session cells would be written in the same block in which it is being read. If the PBPE write pointer (67) reaches the PL read pointer (68) then there would be a queue overflow associated with the session and a subsequent loss of cells. If this happens then the corresponding NCP parameter is increased.

In any of the three above cases the NC meter is increased for the session with the number of cells written in the storage memory being counted for said session.

The process of cell reading is responsible for extracting cells from the storage memory (63) belonging to the corresponding traffic conformity session. After extracting a cell from the memory the PL read pointer value is increased for the session. When there is an overflow then a block would be freed in the following manner:

-.   If the write block is the same as the read block from which exit is required, the block cannot be freed since it is being used in the write process. In order to determine the following block within the session tree from which the following cells should be extracted, the TEB table address (66) content is passed to the read pointer (68) which the PBPL (75) indicates and this increases.

If the write block is not the same as the read block from which exit is required then the block is freed in line with the following rules:

-.   If the number of blocks required for the session (NBR) is greater than or equal to the number of session blocks (NB) then the read block from which exit is required is stored in the TBR table (65).

-.   If the number of blocks required for the session (NBR) is less than the number of session blocks (NB) then the read block from which exit is required is stored in the TBR table (64), increasing the number of assignable blocks by one.

To determine the following block within the session tree from which the following cells should be extracted the TEB table address (66) content is passed to the read pointer (68) which the PBPL (75) indicates and this increases.

Continuing with Figure 4, we have the algorithm spacer block (54) which determines via connection (60) the moments at which the conformity session ATM cells should leave the RAM memory of the memory block (57). The rate at which cell extraction requests that are generated by the algorithmic spacer block (54) depends on the traffic conformity session that has been configured.

The traffic conformity sessions are configured taking account of the following parameters:

a).- PCR (Peak Cell Rate) which is expressed in cells per second.

b).- SCR (Sustainable Cell Rate) which is expressed in cells per second.

c).- MBS (Maximum Burst Size) which is expressed in cells or its equivalent IBT (Intrinsic Burst Tolerance) which is expressed in seconds.

When a traffic conformity session is configured as type DBR, the traffic conformity block (27) delivers a train of equally-spaced cells to its exit at the rate of PCR cells per second. Sessions configured as SBR use all of the aforementioned parameters and achieves a train of burst-distributed cells at the traffic conformity exit block (27) so that the peak traffic within each burst is limited to PCR cells per second and its duration to IBT seconds. The peak traffic is limited to SCR cells per second between bursts.

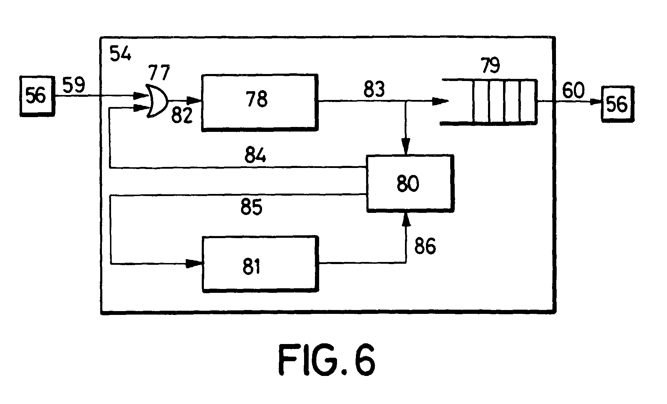

As we can see in Figure 6 the algorithmic spacer block is made up of the following blocks:

   1).- DDS_PCR (78)

   2).- DDS_SCR (81)

   3).- Meter (80)

The DDS_PCR (78) and DDS_SCR (81) blocks both have exactly the same internal structure with an internal associated logic for handling the floating point notation so that at its exit a series of pulses is achieved whose frequency is the number of cells per second that indicate PCR or SCR.

If the traffic conformity session is of the SBR type, and assuming that there are cells in the queue associated with the session -signal connection to OFF (59)-, makes the port (77) OR generate an OFF signal in the connection (82) so that the DDS_SCR block (78) generates exit pulses -these are emission requests- at the PCR rate and these cause increases via connection (83) in the value of the meter block (80). At the same time, the DDS_SCR block (81) generates pulses at the SCR rate -as long as the meter has a value greater than zero, shown because the connection signal (85) is OFF which, via connection (86) cause decreases in the value held in the meter block (80). When this reaches a certain CM value (representing burst length), the connection signal (84) comes ON, causing the port (77) to generate an ON signal in connection (82) which makes the DDS_SCR block (78) stop generating cell emission requests hence causing a cell emission burst.

When the meter block (80) has a zero value shown because the signal (85) is ON, the DDS_SCR block's internal accumulators (81) will continue to increase until overflow and will then stop without restarting functioning until the meter value (80) changes.

If the traffic conformity session is of the DBR type, the meter block value is programmed to that it never reaches the CM value so that, assuming there are cells in the queue associated with the session, the DDS_PCR block (78) generates exit pulses -which are emission requests- at the PCR rate until the associated queue is emptied. Exit pulse generation would restart when the session's associated queue cells start lining up again.

Regardless of the type of conformity session chosen, the requests for cell emission are stored in a pending request queue (79) from where they are extracted in line with memory management block (56) reports to the algorithmic spacer block (54) about the existence of an interval of free cell that is going to be devoted to carrying out the reading of queue memory.

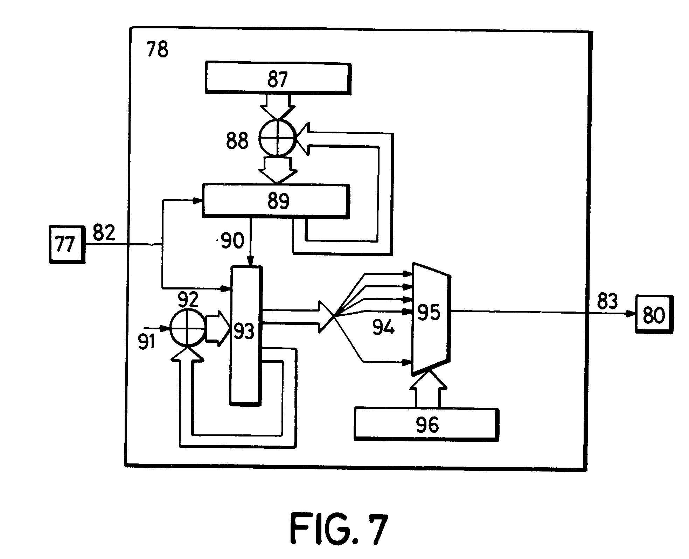

Figure 7 shows the internal structure of the DDS_PCR block (78) which is similar to that of the DDS_SCR block. The only differences are found in the entry and exit connections. By using floating point notation similar to that proposed by the ITU in recommendation I.356 with a mantissa m (87) and an exponential e (96), the aim is to achieve values for the PCR and SCR parameters with:

$$PCR, SCR = \frac{1}{64} \cdot \frac{12 \cdot 10^6}{2^{11}} \, 2^e \, (\, 1 + m/256) \text{ (cél/seg)}$$

which permit specific traffic values between 91.66 cells per second (equivalent to 38,818 bps) and 187,133.8 cells per second (equivalent to 79.34 Mbps) with a relative difference between successive values lower than 0.19%. The logic is as follows:

The block (87) (8 bits with values between 0 and 255) and (89) (8 bits) represent the mantissa and its accumulator. At the same time, the block (96) (4 bits with values between 0 and 10) and (93) (12 bits) represent the exponential and its accumulator. If we call the internal clock frequency "f" which governs said frequency, the sum of the mantissa value (87) and the accumulator (89) would give an overflow signal (90) at a value of 1 with the following frequency:

$$f_{90} = f \cdot m/256.$$

where f is the internal clock frequency governing the accumulators and m the mantissa value.

In turn, the exponential accumulator (93) at frequency f increases its value by 1 (signal (91) to 1) using the summing device (92), except when the signal (90) equals 1 when it increases by two.

The frequency at which i order transport is brought about is the following:

$$f_{ci} = \frac{f + f_{q0}}{2^i}$$

Finally giving an i order transport frequency in the form:

$$f_{ci} = \frac{f}{2^i} + \frac{f_m}{256 \cdot 2^i} = f \cdot 2^{-i} \, (\, 1 + m/256)$$

The value of the exponential (96) acts on the multiplex (95) in order to choose the transport level (94) we are interested in and in such a way that i becomes equal to 11-e so that the frequency with which a pulse is produces in the connection (83) is:

$$f_{pet} = f \cdot 2^{e-11}(1 + m/256)$$

A functioning accumulator (89) and (93) frequency is generally chosen as a multiple or sub-multiple of the clock functioning governing the accumulators. This gives a final formula for the frequency with which a pulse is produced in the connection (83) so that:

$$f_{pet} = K \cdot f \cdot 2^{e-11} \cdot (1 + m/256)$$

where K is constant and e the value of the exponential. for the parameters PCR and SCR that we are interested in, the value of K is chosen as 1/64, meaning accumulator increases are chosen for each 64 clock flanks and for a clock frequency value of $12 \cdot 10^6$ c/s.

Returning to Figure 2, we have the processing block (28) that carries out control of this invention's equipment functions. It will be fitted with an RS-232 line interface with the PC which houses the equipment's Local Management System that is made up of a management software application which runs under Windows 3.1. or later version. It allows for remote loading of new versions of configuration software for logically programmable components.

The processing block (28) controls the initial start-up of the equipment that is the object of this invention via activation and initialisation of its components, including its configuration so that, from the point of view operation and maintenance flows, it behaves as an EP (End Point), CP (Connecting Point) or SEP (Segment End Point).

It will control the following functions:

a).- Management of the physical layer.

b).- Management of the ATM layer.

c).- Management of the VPC connections.

d).- Management of the VCC connections.

e).- Management of the serial line interface.

In managing the physical layer the processing block (28) the functioning of the electro-optical converters and the SDH access terminators of the operator and user interface physical layer modules (2,3) via connections (11) and (12) whilst specifically controlling:

-. Switching the electro-optical conversion lasers on and off.

-. Establishing and consultation of the state of local and remote loops for the user and operator interfaces.

-. The detection and provision of information to the local management system of the alarms corresponding to the F1 flows from the regenerator section level, detecting the LOS (Loss of Signal) and LOF (Loss of frame) alarms. During transmission the FTx (transmission laser failure) alarm is detected.

-. The detection and provision of information to the local management system of the alarms corresponding to the F2 from the digital section level. MS-AIS (Multiplex Section - Alarm Indication Signal), LOP (Loss of Pointer) and EBER-Rx-F2 (Excessive Bit Rate Error on reception on the multiplex section level). During transmission MS-RDI (Multiplex Section - Remote Defect Indication) and EBER-Tx-F2 (Excessive Bit Rate Error on reception on the multiplex section level) alarms are detected.

-. The detection and provision of information to the local management system of the alarms corresponding to the F3 flows from the transmission path level. During reception the following alarms are detected: AIS (Path - Alarm Indication Signal), LOCS (Loss of Cell Synchronism) and EBER-Rx-F3 (Excessive Bit Rate Error on reception on the path level). During transmission, P-RDI (Path - Remote Defect Indication) and EBER-Tx-F3 (Excessive Bit Rate Error in transmission on the path level) alarms are detected.

-. Collation of performance statistics from operation and maintenance flows F2 and F3 as specified in the ITU's recommendation G.826.

In managing the ATM layer the processing block will carry out:

-. Connection management, be they VPC type (both bidirectional and point-multipoint) or VCC (both bidirectional and point-multipoint).

-. The management of traffic conformity sessions, programming the values of the necessary parameters for the functioning of the spacer algorithms and memory management as well as the collection of traffic conformity statistics from different sessions.

-. The management of operation and maintenance functions, be they the establishing of loops, the realisation of continuity tests, the management of performance monitoring sessions, the collation of statistics on the ATM layer performance from the F4 and F5 flows, and the detection and provision of information to the local management system regarding alarms on the ATM layer level. The latter are:

-.   On the F4 flow level the VP-AIS (Virtual Path - Alarm Indication Signal), VP-RDI (Virtual Path - Remote Defect Indication) and VP-LOC (Virtual Path - Loss of Continuity) alarms are detected.

-.   On the F5 flow level the VC-AIS (Virtual Channel Path - Alarm Indication Signal), VC-RDI (Virtual Channel - Remote Defect Indication) and VC-LOC (Virtual Channel - Loss of Continuity) alarms are detected.

VPC connection management defines the connections at intermediate points in a VPC connection and is able to carry out the declaration of a bi-directional VPC connection so that the equipment will need to be provided with VPI (Virtual Path Identifier) entry and exit labels for each interface, or a VPC point-multipoint connection branch declaration so that the equipment will need to be provided with entry and exit interface labels.

VCC connection management allows the VCC declaration to be bi-directional so that the equipment that is the object of this invention will need to work as a VP-EP (Virtual Path-End Point) or a VP-EP/VP-SEP (Virtual Path-Segment End Point) for VPC connections that contain VCC. As well as these VPC having a bi-directional nature or a branch declaration of a VCC point-multipoint connection, it is necessary that the equipment works as VP-EP or VP-EP/VP-SEP for VPC connections that contain the VCC connection, in addition to the VPC connections having a bi-directional or unidirectional nature in the sense of the point-multipoint VCC connection.

Serial line interface management allows the user's commands to be transmitted to the equipment that is the object of this invention via the local management system and interpreted by the processing block (28). This is responsible for programming the hardware and for invoking drivers and controllers for carrying out the necessary actions. At the same time the processing block (28) carries out collection from internal registers of those parameters that are necessary for collating statistics associated with operation and maintenance and traffic conformity sessions, processing them and sending the results by serial line to the local management system for presentation. It will also send messages to the latter which do not require any a priori commands from the user like those that refer to the alarm conditions.

It is thought unnecessary to take this description into any further detail for any expert in the subject matter to grasp the reach of the invention and the advantages that derive from it.

The materials, form, size and disposition of the elements will be susceptible to variation whensoever it does not mean altering the essence of the invention.

**Claims**

1.   ATM layer terminal adapter which acts as an optical line terminator in broad band networks aimed at adapting and optimising user or private user network access to a public ATM supported by B-ISND (Broad Band Integrated Service Digital Network). It is characterised by being made up of a physical layer module (2) interface with the operator, a physical layer module (3) interface with the user, a synchronism module (4) and an ATM layer module (1). The physical layer module (2) interface with the operator presents an architecture made up of a monomode electro-optical access converter (6) which converts electrical signals into optical ones and vice-versa, an SDH access terminator block (5) (Synchronous Digital Hierarchy) while the Physical Layer Interface Module (3) with the user presents an architecture that includes a converter (8) for conversion of electrical signals into optical ones and vice-versa, and an SDH user terminator (7). The synchronism module (4) is fitted with a PLL (Phased Locked Loop) in connection (23) with the electro-optical access converter (6) to receive an information signal giving the network access and connection binary transmission speed (17, 18, 24, 24, 15) with the SDH access terminator (5), the user SDH terminator (7), the electro-optical access converter (6) and the ATM layer access module (1) respectively for sending synchronism information to them by choosing from the signal coming from the operator access interface (25) and a signal from an internal oscillator integrated into the synchronism module (4) itself.

2.   ATM layer terminal adapter that acts as a broad band network optical line termination in accordance with claim 1. It is characterised by the ATM layer module (1) being implemented according to an architecture that takes account of a selector/discrimator block (32), a cell replicator block (31), an access multiplex (29), a user multiplex (33), an operation and maintenance block (30), a traffic conformity block (27) and a processing block (28) providing a connection (9) from the SDH access terminator module (2) to the selector discriminator (32) of the module (1) for delivery of the VC-4 (type 4 virtual container) of the STM-1 frame structure (Level 1 synchronism transmission module) from the SDH to the ATM layer module (1), a connection (10) from the traffic conformer (27) to the SDH access terminator (5) from the module (2) for the assembly of the VC-4 virtual container coming from the module (1) within the SDH's STM frame structure, a connection (13) from the SDH user terminator (7) of the module (3) to the selector/discriminator (32) of module (1) for delivery of the VC-4 (type 4 virtual container) of the STM-1 frame structure (Level 1 synchronism transmission module) from the SDH to the ATM layer module (1), a connection from the user multiplex (33) to the user SDH terminator (7) of module (3) for the assembly of the VC-4 virtual container coming from the module (1) of the ATM layer within the SDH's STM frame structure, a connection (11) of the signal flow in both directions between the processing block (28) and the physical layer module (2) interface with the operator to provide him/her with control over the converter (6) and the terminator (5), signal flow connection (12) in both directions between the processing block (28) and the physical layer module (3) interface with the operator to provide him/her with control over the converter (8) and the terminator (7).

3. ATM layer terminal adapter that acts as a broad band network optical line termination in accordance with claim 2. It is characterised by the selector/discrimator block (32) being capable of carrying out ATM cell label heading translation functions, identification and marking of groups of cells that the operation and maintenance blocks (30), traffic conformity blocks (27) and cell replicator blocks should process. To do this the selector/discrimator block (32) receives the flow of ATM cells coming from the user interface from the user's SDH terminator block (7) via connection (13) in the appropriate format along with a series of associated synchronism signals. It receives the flow of ATM cells coming from the operator interface from the SDH access terminator block (9) in the appropriate format along with a series of associated synchronism signals. It receives the flow of replicated cells from the cell replicator block (31) along with the synchronism signals and associated destination interface identification. It exchanges data with the processing block (28) for the configuration of heading translation functions, establishing connections, of operation and maintenance sessions and of traffic conformity sessions, it sends the flow of ATM cells along with the associated synchronism information to the cell replicator block along with indication of the destination interface towards which the replicated cells should be sent and sends the flow of ATM cells to the operation and maintenance blocks, access multiplex, user multiplex along with a series of signals to indicate to each of them the ATM cells that they should process via connection (40), access multiplex (29) via connection (39) and user multiplex (33) via connection (43).

4. ATM layer terminal adapter that acts as a broad band network optical line termination in accordance with claims 2 and 3. It is characterised by the cell replicator block (31) being capable of replicating the cells of those connections which have been defined as point-multipoint type and for this reason it receives the flow of original ATM cells to be replicated from the selector/discrimator block (32) via connection (42) along with the synchronism information and the indication of the destination interface towards which the replicated cells should be sent. It also sends the replicated ATM cells to the selector/discriminator block (32) via connection (44) along with associated synchronism signals and destination interface identification.

5. ATM layer terminal adapter that acts as a broad band network optical line termination in accordance with claims 2, 3 and 4. It is characterised by the traffic conformer block being capable of changing the traffic characteristics of a train of ATM cells in a virtual channel connection (VCC) or in a virtual path connection (VPC) so that they are modified in a controlled manner and maintain the integrity of the cell sequence in the ATM connection, being able to configure two types of traffic conformity for each connection, one is of the Deterministic Bit Rate type (DBR) using an appropriate cell time spacing, and the other is SBR (Statistical Bit Rate) by limiting the length of the generated cell burst and for as much it is connected to the rest of the device's components so that it receives a set of signals via connection (36) from the user multiplex which indicate whether a cell makes up part of a conformity session or not. Along with the index for the session being dealt with, it receives information relating to traffic conformity sessions from the processing block (28), be they the configuration parameters of new sessions via connection (34), or signals establishing or freeing a session via connection (58); it sends a flow of ATM cells to the physical layer module (2) interface with the operator via connection (10) once they have been subjected to traffic conformity.

6. ATM layer terminal adapter that acts as a broad band network optical line termination in accordance with claims 1 to 5. It is characterised by the operation and maintenance block presenting an internal architecture which is made up of a programmable logic block (45), a twin-port memory block (46) and a Microcontroller block (47). The programmable logic block (45) is capable of carrying out high speed cell generation and detection functions over the flow of cells coming from the selector/discriminator (32) via connection (40) and connected with the twin port memory block (46) via address strand (50) and data strand (48) to store information and partial results extracted from the data cells. It is capable of using signals from connections (52) and (53) to indicate to the Microcontroller block (47) the start of a DMA process (Direct Memory Access) to extract, using the address (51) and data (49) strands, the information stored in the twin-port memory block (46) while the Microcontroller block (47) is used to collate transmission statistics, update alarm conditions as well as storing the information required by the programmable logic block (45) in the appropriate segment for the formation of cells that will be inserted in the flow coming from the selector/discriminator block (32), providing it with a communications channel (35) between the Microcontroller block (47) and the processing block (28).

7. ATM layer terminal adapter that acts as a broad band network optical line termination in accordance with claim 6. It is characterised by the twin port memory block (46) being structured in memory segments whose size depends on their function, used for the exchange of information associated with the generation and detection of each kind of OAM cell (flows F4 and F5).

8. ATM layer terminal adapter that acts as a broad band network optical line termination in accordance with claims 1 to 7. It is characterised by the traffic conformer block (27) having an internal architecture made up of a twin port memory block (55), a memory block (57), a memory management block (56) and an algorithmic spacer block (54). The twin port memory block (55) is connected for the flow of information in both directions with the processing block (28) via connection (34). The memory block (57), a Random Access Memory (RAM) for storing those ATM cells that belong to connections that lie within any traffic conformity session and which are marked by the user multiplex block (29) using a series of associated signals. The memory management block (56) handles the share-out of the memory block cell storage RAM which is needed to carry out the traffic conformity function while the algorithmic spacer block (54) is setting up determination via connection (60) with the memory management block (56) the moments when the ATM cells should leave the RAM memory block (57) in line with the traffic conformity session that has been configured. Information regarding the selected traffic configuration is received via connection (59) and the memory management block (56) accesses the traffic conformity session configuration parameters stored in the twin-port memory block (55) via connection (61).

9. ATM layer terminal adapter that acts as a broad band network optical line termination in accordance with claim 8. It is characterised by the memory block (57) being split into blocks of fixed size and position blocks and by the memory management block (56) being able to handle by means of the appropriate parameters the aforementioned blocks of RAM memory as a set of FIFO type memories or dynamically sized logical queues which adapt as a function of each traffic conformity session's characteristics, with each of them corresponding to a conformity session whose elements represent the blocks into which the memory (57) is divided.

10. ATM layer terminal adapter that acts as a broad band network optical line termination in accordance with claims 8 and 9. It is characterised by the traffic conformity sessions being configured by a PCR (Peak Cell Rate) parameter which represents the highest possible cell rate, an SCR (Sustainable Cell Rate) parameter representing the sustainable cell rate and the MBS parameter for the Maximum Burst Size and is equivalent to IBT (Intrinsic Burst Tolerance) which is expressed in seconds. When a traffic conformity session is configured as type DBR, the traffic conformity block (27) delivers a train of equally-spaced cells to its exit (10) at the rate of PCR cells per second. Sessions configured as SBR achieves a train of burst-distributed cells at the traffic conformity block (27) exit (10) so that peak traffic is limited to PCR cells per second and its duration IBY seconds.

11. ATM layer terminal adapter that acts as a broad band network optical line termination in accordance with claims 8 to 10. It is characterised by the algorithmic spacer block (54) being made up of a DDS_PCR (78), a DDS_SCR block (81), a meter (80) a twin-entry OR port (77) and a request queue (79) with the DDS_PCR and DDS_SCR both having exactly the same internal structure with an internal associated logic for handling the floating point notation so that at its exit (83,86) a series of pulses is achieved whose frequency is the number of cells per second that indicate PCR or SCR parameters. The algorithmic spacer block (54) has an entry flow connection (59) from the memory management block (56) to the first of the two OR entry ports (77) and a connection (60) for the exit flow towards the memory management block (56). Connection (84) provides for the signal flow from the meter's (80) first exit to the second of the two OR entry ports (77), another connection (85) provides for the signal flow from the meter's (80) second exit to the DDS_SCR entry block (81). A connection (82) from the OR port exit to the DSS_PCR entry block (78) and a connection (83) from the DSS_PCR exit block (78) to the request queue (79) with a derivation of this signal to the first meter entry (80) and a connection (86) for signal flow from the DSS_SCR block (81) to the meter (80).

12. ATM layer terminal adapter that acts as a broad band network optical line termination in accordance with preceding claims. It is characterised by the processing block (28) having RS-232 line interface for connecting to a PC which houses the equipment's Local Management System that is made up of a management software application for running in said computer (preferably under Windows 3.1. or later version.). New versions can be loaded remotely including both software and configuration of the device's programmable logic. The processing block (28) can carry out initial start-up of the equipment, physical layer management which specifically means switching the electro-optical conversion lasers on and off, establishing and consultation of the state of local and remote loops on the physical layer level, the detection and provision of information to the local management system of the alarms on the physical layer level and the collation of performance statistics from operation and maintenance flows F2 and F3. Managing the ATM layer specifically means the equipment handling functions like connection management, determining its behaviour for each connection with respect to operation and maintenance, traffic conformity session management, programming the values of the necessary parameters for the functioning of the spacer algorithms and memory management as well as the collection of traffic conformity statistics from different sessions, the management of operation and maintenance functions, by establishing loops, the realisation of continuity tests, the management of performance monitoring sessions, the collation and transmission to the local management system of statistics on the ATM layer performance from the F4 and F5 flows, and the detection and provision of information to the local management system regarding the alarms on the ATM layer level.

FIG.1

FIG.2

FIG. 3

FIG.4

# FIG.5

FIG.6

**FIG. 7**